Europäisches Patentamt

European Patent Office

Office européen des brevets

(11) Numéro de publication : **0 346 256 B1**

## (12) FASCICULE DE BREVET EUROPEEN

(45) Date de publication du fascicule du brevet :
**13.05.92 Bulletin 92/20**

(21) Numéro de dépôt : **89440053.0**

(22) Date de dépôt : **08.06.89**

(51) Int. Cl.⁵ : **F16L 55/18**

(54) **Dispositif de réhabilitation in situ de canalisations non visitables de l'intérieur.**

(30) Priorité : **10.06.88 FR 8807973**

(43) Date de publication de la demande :
**13.12.89 Bulletin 89/50**

(45) Mention de la délivrance du brevet :
**13.05.92 Bulletin 92/20**

(84) Etats contractants désignés :
**AT BE CH DE ES FR GB GR IT LI LU NL SE**

(56) Documents cités :
**EP-A- 0 146 331**
**WO-A-87/03353**

(56) Documents cités :
**FR-A- 1 398 057**
**FR-A- 2 579 294**
**US-A- 4 377 984**
**US-A- 4 429 720**

(73) Titulaire : **Frey, André**
**156, rue du Général Leclerc**
**F-57560 Abreschviller (FR)**

(72) Inventeur : **Frey, André**
**156, rue du Général Leclerc**
**F-57560 Abreschviller (FR)**

(74) Mandataire : **Nuss, Pierre et al**
**10, rue Jacques Kablé**
**F-67000 Strasbourg (FR)**

EP 0 346 256 B1

# Description

La présente invention a pour objet un dispositif de réhabilitation in situ de canalisations d'eaux pluviales ou usées non visitables de l'intérieur, car d'un diamètre trop réduit, par injection sous pression d'un produit colmatant, comportant un module avant et un module arrière.

On sait que de nombreuses canalisations existantes ne sont pas directement accessibles de l'intérieur, car leur diamètre est trop réduit, mais pas non plus directement accessibles de l'extérieur, car enterrées à des profondeurs relativement importantes.

Lorsqu'on met en évidence des fuites dans de telles canalisations, il est alors nécessaire, pour boucher les fissures, d'y faire passer un dispositif qui circule entre deux regards, afin d'effectuer la réparation.

Or, les dispositifs existants présentent des inconvénients multiples, tels que difficultés pour réparer la partie inférieure des canalisations, difficultés pour effectuer un bouchage des fissures importantes réellement efficace et fiable dans le temps, durée importante pour remplir tout un tronçon de canalisation avec du produit colmatant, installations très conséquentes en surface, etc...

On a alors pensé à réaliser un dispositif tentant de pallier ces inconvénients. Un tel dispositif est connu du document FR-A-2 579 294. Ce dispositif comprend notamment un tronçon central d'un diamètre inférieur à celui de la canalisation et deux tronçons extrêmes, respectivement avant et arrière, encadrant le tronçon central, chaque tronçon extrême présentant un diamètre plus grand que celui du tronçon central et étant pourvu, d'une part, de moyens de guidage, d'autre part, de moyens d'étanchéité et, enfin, de moyens racleurs.

Mais, ce dispositif présente différents inconvénients, dont notamment celui, majeur, de ne pas pouvoir circuler à l'intérieur des canalisations lorsque celles-ci sont en très mauvais état, par exemple, lors d'un effondrement dans une canalisation, cette dernière n'existant pratiquement plus à ce moment là sur un tronçon déterminé. En effet, le dispositif est alors bloqué dans la canalisation ; il n'est plus question de le faire avancer et il peut même être très difficile de le faire ressortir par l'arrière, en le reculant, sans endommager, parfois même gravement, les moyens d'étanchéité, qui doivent ainsi être par la suite remplacés.

De plus, ce dispositif présente l'inconvénient de ne pas pouvoir s'adapter à des diamètres différents de canalisation. Or, on sait que les canalisations présentent très souvent des diamètres très différents, pouvant aller, par exemple, de 150 mm à plus de 300 mm.

En outre, ce dispositif entraîne une perte très importante de produit colmatant, car il présente une chambre d'injection, située entre les deux tronçons extrêmes, très grande. Cette chambre devant être entièrement remplie de produit, il s'ensuit inévitablement une perte très conséquente dudit produit dans ladite canalisation, ce qui entraîne, en outre, un nettoyage forcé de celle-ci, une fois le dispositif ressorti.

Enfin, ce dispositif ne permet pas, malgré tout, la réparation de grosses fissures longitudinales, du fait d'une instabilité du produit colmatant qui n'est pas suffisamment maintenu dans les parois de la canalisation après mise en place.

De plus, une installation importante est tout de même nécessaire en surface.

Le problème général à résoudre par l'objet de la présente invention consiste donc à réaliser un dispositif de réhabilitation in situ de canalisations non visitables de l'intérieur permettant, d'une part, le travail même dans les canalisations ayant subi des effondrements et où des pans de parois ont été arrachés et n'existent plus, et ce sans abîmer pour autant les moyens d'étanchéité et, d'autre part, l'adaptation à des diamètres de canalisations différents. En outre, ce dispositif devra éviter d'entraîner une perte conséquente du produit, tout en autorisant la réparation de fissures longitudinales importantes, et ce sans pour autant nécessiter une installation sophistiquée en surface.

Selon la présente invention, ce problème général est résolu en ce que le dispositif de réhabilitation in situ de canalisations d'eaux pluviales ou usées non visitables de l'intérieur car d'un diamètre trop réduit, par injection sous pression grâce à une pompe d'un produit colmatant amené par des moyens d'alimentation dans une chambre d'injection, ledit dispositif comportant un module avant pourvu à son extrémité antérieure d'un système d'accrochage et un module arrière pourvu de moyens d'étanchéité, est caractérisé en ce que chaque module est pourvu de bras mobiles grâce à un moyen hydraulique, relié à une pompe hydraulique, disposée en surface, d'une position hors service dans une position en service, de manière à ce que le module avant joue le rôle d'écarteur et de guide afin de permettre le passage du module arrière qui est, quant à lui, pourvu de moyens d'étanchéité interchangeables à chacune de ses deux extrémités, délimitant ainsi avec la canalisation la chambre d'injection, précisément au niveau du module arrière lui-même, de façon à minimiser la perte en produit colmatant, ce dernier étant amené, d'une part dans la chambre grâce à un tube relié à la pompe disposée en surface et débouchant dans ladite chambre, et d'autre part dans les parois de la canalisation, non seulement entre les bras du module arrière, mais aussi à travers ces mêmes bras qui sont pourvus de perforations et qui maintiennent ainsi le produit colmatant après la mise en place de ce dernier, une adaptation du dispositif de réhabilitation à différents diamètres de canalisations étant posssible grâce, d'une part, à l'interchangeabilité des moyens d'étanchéité et, d'autre part, à des moyens équipant les bras de chaque module pour la fixation de plaquettes.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 représente, de face et en coupe, le schéma de principe de fonctionnement du dispositif conforme à l'invention ;

la figure 2 est une vue de face et en coupe, à une échelle différente, du dispositif conforme à l'invention, en action dans une canalisation ;

la figure 3 est une vue de face, à une échelle différente, d'un premier mode de réalisation du module avant du dispositif conforme à l'invention ;

la figure 4 est une vue de face, à une échelle différente, d'un premier mode de réalisation du module arrière du dispositif conforme à l'invention ;

la figure 5 est une vue de face, à une échelle différente, d'un second mode de réalisation du module avant du dispositif conforme à l'invention dépourvu du moyen hydraulique ;

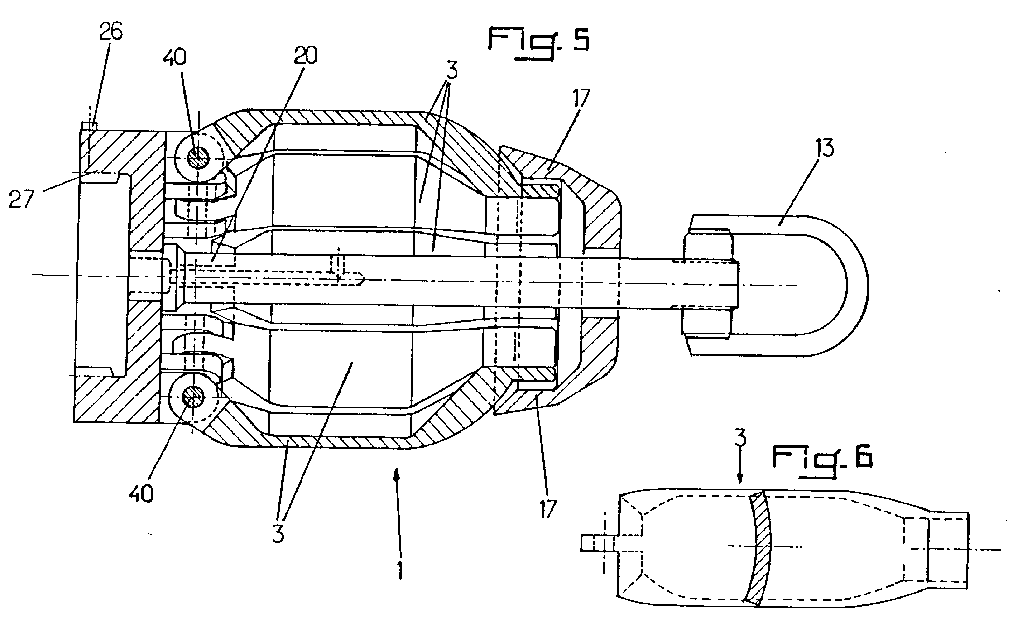

la figure 6 est une vue de dessus d'un bras du module avant ou du module arrière du dispositif conforme à l'invention, et

la figure 7 est une vue de face, à une échelle différente, d'un second mode de réalisation du module arrière du dispositif conforme à l'invention.

Conformément à l'invention, le dispositif de réhabilitation est caractérisé en ce que chaque module 1, 2 est pourvu de bras 3, 5 mobiles grâce à un moyen hydraulique 4, 6 relié à une pompe hydraulique 8, disposée en surface, d'une position hors service dans laquelle les bras 3, 5 définissent un diamètre nettement inférieur à celui de la canalisation 7 à réhabiliter, dans une position en service, dans laquelle les bras 3, 5 définissent un diamètre égal ou très légèrement inférieur à celui de la canalisation 7 à réabiliter, de manière à ce que le module avant 1, par pression des bras 3 sur les parois internes endommagées de la canalisation 7, joue le rôle d'écarteur et de guide afin de permettre le passage du module arrière 2 qui est, quant à lui, pourvu des moyens d'étanchéité 9 interchangeables à chacune de ses deux extrémités, délimitant ainsi avec la canalisation 7 la chambre d'injection 10, précisément au niveau du module arrière 2 lui-même, da façon à minimiser la perte en produit colmatant, ce dernier étant amené, d'une part dans la chambre 10 grâce à un tube 11 relié à la pompe 12 disposée en surface et débouchant dans ladite chambre 10, et d'autre part dans les parois de la canalisation 7, non seulement entre les bras 5 du module arrière 2, mais aussi à travers ces mêmes bras 5 pourvus de perforations qui maintiennent ainsi le produit colmatant après la mise en place de ce dernier, une adaptation du dispositif de réhabilitation à différents diamètres de canalisations étant posssible grâce, d'une part, à l'interchangeabilité des moyens d'étanchéité 9 et, d'autre part, à des moyens de fixation de plaquettes 42 des bras 3, 5 de chaque module 1, 2.

Le tube 11 pourra être relié à la pompe 12 par l'intermédiaire, par exemple, d'un flexible 30. Le flexible 30 pourra, par exemple, être fixé au tube 11 grâce à un accouplement rapide à cames connu sous la dénomination CAMLOCK.

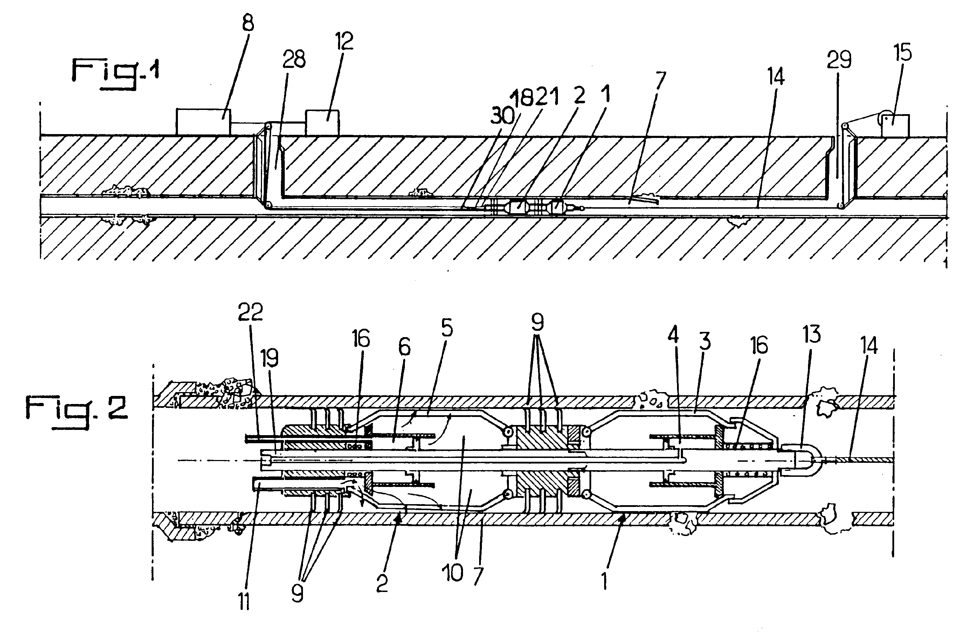

Le module avant 1 joue donc le rôle d'écarteur et de guide, permettant ainsi, comme le montre la figure 2 des dessins annexés, de dégager la canalisation 7 et de remettre en place les différents fragments de parois qui s'étaient soit détachés, soit effondrés dans celle-ci, et ce avant toute injection de produit colmatant. Toutes les alimentations s'effectuent par l'arrière du dispositif, que ce soient les alimentations des moyens hydrauliques 4, 6 ou l'alimentation en produit colmatant. Ainsi, ces alimentations, sous la forme de flexibles, ne peuvent pas être endommagées par des pans de parois de la canalisation 7 qui n'auraient pas encore été réparés.

Le module avant 1 permet également une pénétration dans la canalisation 7, même lorsqu'il manque des morceaux de parois, la terre elle-même étant alors mise en place de manière à former une voûte.

Selon un premier mode de réalisation de l'invention, les deux modules avant 1 et arrière 2 sont articulés entre eux, par exemple grâce à un système à cardan, à boule, à chaînes ou à câbles, de manière à permettre un meilleur passage dans les canalisations 7, présentant souvent des variations angulaires et parfois même des coudes.

Une telle articulation présente comme principal avantage d'éviter un éventuel blocage du dispositif dans la canalisation 7, qui serait dû à des variations angulaires de celle-ci (affaissement, coude, etc...).

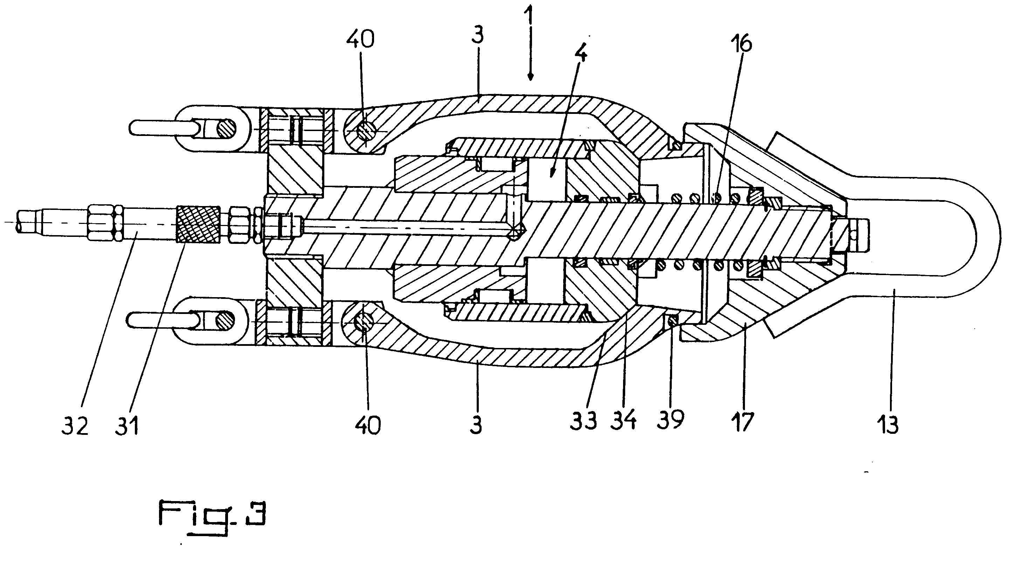

Les figures 3 et 4 des dessins annexés représentent les modules avant 1 et arrière 2 d'un dispositif de réhabilitation à chaînes. Comme on peut le voir sur ces deux figures, les deux modules avant 1 et arrière 2 sont démontables et sont reliés entre eux, par exemple grâce à un ensemble de raccords rapides hydrauliques 31 et de flexible hydraulique 32. Le flexible hydraulique 32 relie la tige centrale percée 19 du module 2 à l'axe primaire 20 du module 1.

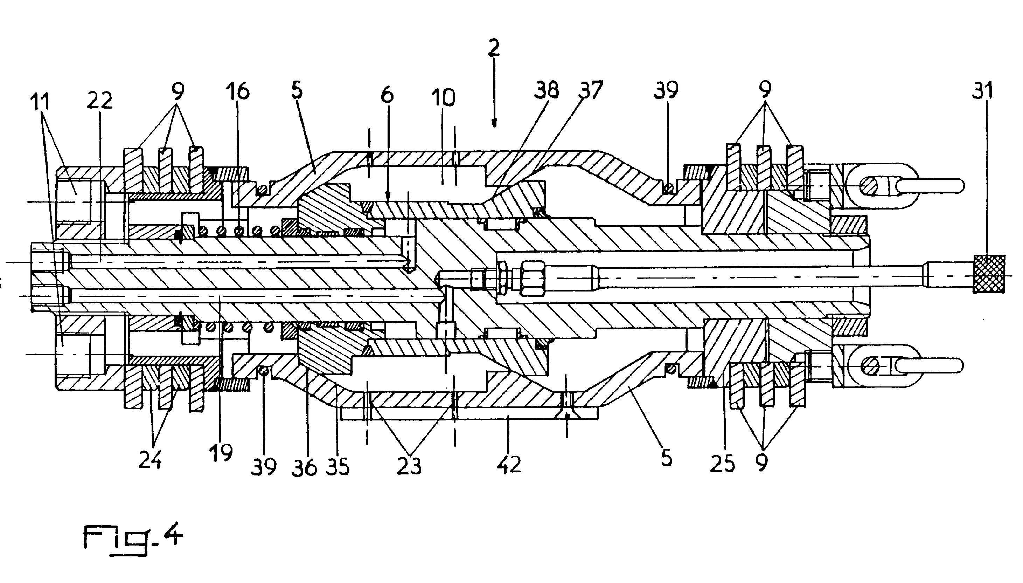

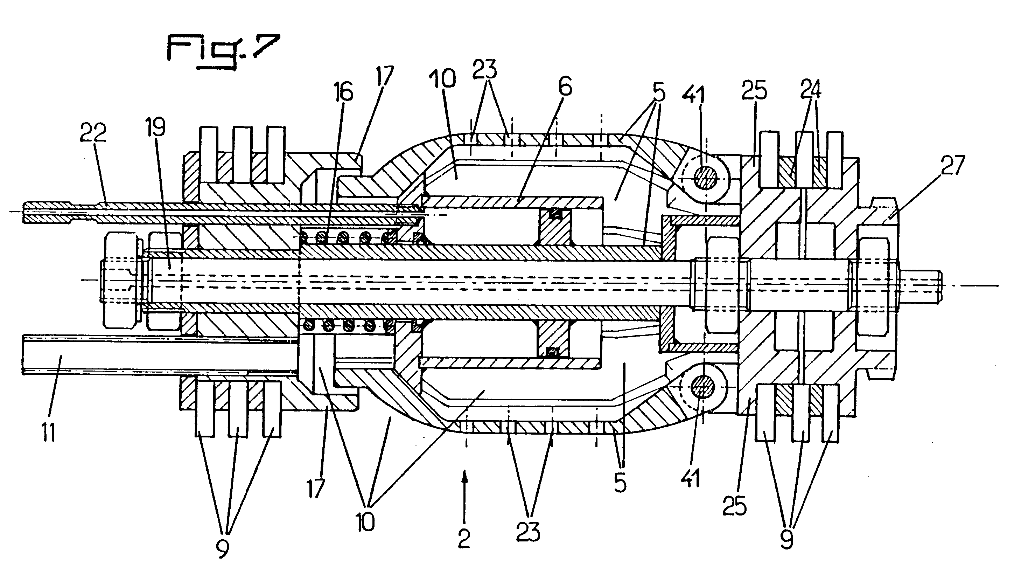

Selon un second mode de réalisation de l'invention, et comme le montrent les figures 5 et 7 des dessins annexés, les deux modules avant 1 et arrière 2 sont démontables et sont reliés entre eux, par exemple par boulonnement 26 sur tube fileté 27.

Selon une caractéristique supplémentaire de l'invention, et comme représenté aux revendications 3 et 5 des dessins annexés, le système d'accrochage 13 du module avant 1 est sous la forme d'un crochet, permettant de tracter le dispositif à l'intérieur de la canalisation 7 grâce à un câble de tirage 14 et un treuil 15 disposé en surface.

Le treuil 15 peut être avantageusement à main.

Le fait de pouvoir utiliser un treuil à main 15 résulte également de l'un des nombreux avantages du dispositif conforme à l'invention. En effet, le module avant 1 jouant le rôle d'écarteur, il s'ensuit que le dispositif ne nécessite qu'une puissance relativement faible pour progresser dans la canalisation 7. Un treuil à main 15 disposé en surface suffit, par conséquent, pour tracter l'ensemble du dispositif par l'intermédiaire du câble de tirage 14 (figure 1).

Conformément à une autre caractéristique de l'invention, chaque moyen hydraulique 4, 6 est sous la forme d'un vérin pourvu d'un ressort de rappel 16, actionnant chaque bras 3, 5 en position de service contre une butée 17 par l'intermédiaire d'un système de segments coniques 33, 34 et 35, 36 coopérant entre elles, le vérin 4 du module avant 1 par l'intermédiaire d'un flexible 18 relié, d'un côté, à la pompe hydraulique 8 et, de l'autre, à l'extrémité arrière de la tige centrale percée 19 du module 2, elle même reliée à l'axe primaire 20 du module 1, et le vérin 6 du module arrière 2 par l'intermédiaire d'un flexible 21 relié d'un côté à la pompe hydraulique 8 et, de l'autre, à l'extrémité arrière de la tige percée 22 (figures 4 et 7).

Cette disposition permet, par conséquent, comme déjà indiqué plus haut, des alimentations hydrauliques et en produit colmatant se faisant exclusivement par l'arrière du dispositif.

Comme le montrent les figures 5 et 7 des dessins annexés, chaque bras 3, 5 est articulé autour de son extrémité opposée à celle en contact avec la butée 17 autour d'un axe d'articulation 40, 41.

Comme représenté à la figure 4 des dessins annexés, l'axe d'articulation 41 du module arrière 2 peut être remplacé par un second système de segments coniques 37, 38 coopérant entre elles.

Selon une caractéristique supplémentaire de l'invention, chaque bras 3, 5 est maintenu dans sa position initiale non écartée par un ressort de rappel 39.

En outre, les bras 3, 5 sont munis de moyens de fixation de plaquettes 42, ces dernières permettant une adaptation du dispositif à différents diamètres de canalisation (voir figure 4 des dessins annexés).

Comme représenté aux figures 3 à 5 et 7 des dessins annexés, les bras 5 du module arrière 2, ainsi que, le cas échéant, les plaquettes 42, sont avantageusement au nombre de six et sont munis de perforations 23 pour le passage du produit colmatant.

Ces perforations 23 permettent ainsi au produit de passer de la chambre d'injection 10 dans les parois de la canalisation 7, non seulement entre les bras 5, mais aussi à travers ces mêmes bras 5, justement à travers les trous 23.

Enfin, comme le montrent les figures 4 et 7 des dessins annexés, les moyens d'étanchéité 9 sont avantageusement sous la forme, à chacune des deux extrémités du module arrière 2, de trois joints en toile de caoutchouc en forme de disque maintenus en place par des rondelles 24 et des supports 25 et dimensionnés de telle façon qu'ils supportent la pression d'injection du produit colmatant dans la chambre d'injection 10 de l'ordre de 1 à 1,5 bar.

On constate, par conséquent, qu'en ne remplaçant que les joints d'étanchéité 9 et les rondelles 24, et en fixant sur les bras 3, 5 des plaquettes 42 de l'épaisseur désirée, par exemple à l'aide de vis disposées dans des trous taraudés dont sont pourvus lesdits bras 3, 5, il est possible de réparer des canalisations 7 de diamètre différent (pouvant aller, comme déjà indiqué plus haut, de 150 à plus de 300 mm).

Le dispositif conforme à l'invention, fonctionne, par conséquent, de la manière suivante :

On commence par descendre à travers un regard 28 (figure 1) le module avant 1. Puis, on accroche le câble de tirage 14 au crochet 13 du module avant 1 et on actionne le treuil manuel 15 jusqu'à ce que le module avant 1 se trouve engagé dans la canalisation 7. Si celle-ci présente, dès le départ, des parties à réhabiliter, les bras 3 sont alors mis en pression par mise en route de la pompe 8 en surface (une dérivation dans les flexibles 18, 21 étant prévue) qui agit sur le vérin 4. Ils se plaquent contre les parois de la canalisation 7, ou de ce qu'il en reste, en s'écartant de quelques millimètres jusqu'à la butée 17 et la remettent à son diamètre initial, le terrain restant en place sous l'effet de voûte. Puis, la pompe 8 est à nouveau stoppée et le vérin 4 remet les bras 3 dans leur position initiale.

Ensuite, on descend le module arrière 2 à travers le regard 28 et on le verrouille avec le module avant 1 (grâce au tube fileté 27 et aux boulons 26). On actionne alors le treuil 15 de manière à amener l'arrière du module 2 à l'entrée du regard 28. Les bras 3 sont ensuite à nouveau mis en pression pour remettre la partie de la canalisation 7 suivante à son diamètre initial. Simultanément ou ensuite, les bras 5 du module arrière 2 sont mis en pression par mise en route de la pompe 8 en surface qui agit sur le vérin 6. Ils se plaquent contre les parois de la canalisation 7 qui ont été préalablement remises en place, en s'écartant de quelques millimètres jusqu'à la butée 17, et la pompe 12 est mise en route de manière à injecter le produit colmatant dans la chambre d'injection 10, puis dans les parois elles-même. Cette injection s'effectue à une pression d'environ 1 à 1,5 bar. L'injection du produit colmatant se poursuit jusqu'à ce que la pression d'injection se stabilise, ceci indiquant que toutes les fissures ont été obstruées. Les pompes 8 et 12 sont alors stoppées.

Après une courte attente de pré-durcissement de l'ordre d'une trentaine de secondes, le treuil 15 est à nouveau actionné manuellement de manière à avancer le dispositif conforme à l'invention dans la canalisation 7 d'une longueur légèrement inférieure à la chambre d'injection 10, ceci afin d'obtenir un recouvrement et d'éviter qu'une partie de la canalisation 7 n'ait pas été vérifiée et traitée.

Puis, le module avant 1 entre à nouveau, le cas échéant, en action. Simultanément ou ensuite, le module arrière 2 entre également en action.

Cette séquence d'étapes se poursuit jusqu'à ce que le dispositif ait parcouru l'ensemble du tronçon de la canalisation 7 à réhabiliter.

On désolidarise alors les deux parties avant 1 et arrière 2 du dispositif et on les ressort à travers le regard 29.

Il est à noter que la partie avant 1 peut également être utilisée seule lorsqu'il s'agit uniquement de débloquer et de nettoyer une canalisation 7 légèrement endommagée, sans pour autant qu'il soit nécessaire d'injecter du produit colmatant.

Il faut également noter, par ailleurs, que le module arrière 2 peut être pourvu d'un second tube d'arrivée 11 de produit colmatant, les deux tubes 11 étant alors reliés au flexible 30, lorsqu'il est nécessaire d'injecter une grande quantité de ce produit.

La description ci-dessus a, par conséquent, mis en valeur la grande efficacité du dispositif conforme à l'invention, ainsi que la facilité de sa mise en oeuvre et de son déplacement à l'intérieur d'une canalisation 7 à réhabiliter, ce, en particulier, grâce à la présence du module avant 1 qui joue le rôle d'écarteur et de guide, annulant ainsi tous les obstacles, tels qu'éclats dans la canalisation 7, et lui redonnant son diamètre initial, facilitant ainsi le passage du module arrière 2, ce qui permet une parfaite injection sur toute l'enveloppe de la canalisation 7, même là où celle-ci n'existe plus, le terrain étant alors utilisé comme coffrage extérieur.

**Revendications**

1. Dispositif de réhabilitation in situ de canalisations d'eaux pluviales ou usées non visitables de l'intérieur car d'un diamètre trop réduit, par injection sous pression grâce à une pompe d'un produit colmatant amené par des moyens d'alimentation dans une chambre d'injection, ledit dispositif comportant un module avant pourvu à son extrémité antérieure d'un système d'accrochage et un module arrière pourvu de moyens d'étanchéité, caractérisé en ce que chaque module (1, 2) est pourvu de bras (3, 5) mobiles grâce à un moyen hydraulique (4, 6), relié à une pompe hydraulique (8), disposée en surface, d'une position hors service dans une position en service, de manière à ce que le module avant (1) joue le rôle d'écarteur et de guide afin de permettre le passage du module arrière (2) qui est, quant à lui, pourvu de moyens d'étanchéité (9) interchangeables à chacune de ses deux extrémités, délimitant ainsi avec la canalisation (7) la chambre d'injection (10), précisément au niveau du module arrière (2) lui-même, de façon à minimiser la perte en produit colmatant, ce dernier étant amené, d'une part dans la chambre (10) grâce à un tube (11) relié à la pompe (12) disposée en surface et débouchant dans ladite chambre (10), et d'autre part dans les parois de la canalisation (7), non seulement entre les bras (5) du module arrière (2), mais aussi à travers ces mêmes bras qui sont pourvus de perforations (23) et qui maintiennent ainsi le produit colmatant après la mise en place de ce dernier, une adaptation du dispositif de réhabilitation à différents diamètres de canalisations étant possible grâce, d'une part, à l'interchangeabilité des moyens d'étanchéité (9) et, d'autre part, à des moyens (42) équipant les bras (3, 5) de chaque module (1, 2) pour la fixation de plaquettes.

2. Dispositif de réhabilitation selon la revendication 1, caractérisé en ce que les deux modules avant (1) et arrière (2) sont articulés entre eux, grâce à un système à cardan, à boule, à chaînes ou à câbles, de manière à permettre un meilleur passage dans les canalisations (7), présentant souvent des variations angulaires et parfois même des coudes.

3. Dispositif de réhabilitation selon l'une quelconque des revendications 1 et 2, caractérisé en ce que les deux modules avant (1) et arrière (2) sont démontables et sont reliés entre eux, par exemple grâce à un ensemble de raccords rapides hydrauliques (31) et de flexibles hydrauliques (32).

4. Dispositif de réhabilitation selon la revendication 1, caractérisé en ce que les deux modules avant (1) et arrière (2) sont démontables et sont reliés entre eux, par boulonnement (26) sur tube fileté (27).

5. Dispositif de réhabilitation selon l'une quelconque des revendications 1 à 4, caractérisé en ce que le système d'accrochage (13) du module avant (1) est sous la forme d'un crochet, permettant de tracter le dispositif à l'intérieur de la canalisation (7) grâce à un câble de tirage (14) et un treuil (15) disposé en surface.

6. Dispositif de réhabilitation selon l'une quelconque des revendications 1 à 5, caractérisé en ce que chaque moyen hydraulique (4, 6) est sous la forme d'un vérin pourvu d'un ressort de rappel (16), actionnant chaque bras (3, 5) en position de service contre une butée (17) par l'intermédiaire d'un système de segments coniques (33, 34 et 35, 36) coopérant entre elles, le vérin (4) du module avant (1) par l'intermédiaire d'un flexible (18) relié, d'un côté, à la pompe hydraulique (8) et, de l'autre, à l'extrémité arrière de la tige centrale percée (19) du module (2), elle même reliée à l'axe primaire (20) du module (1), et le vérin (6) du module arrière (2) par l'intermédiaire d'un flexible (21) relié, d'un côté, à la pompe hydraulique (8) et, de l'autre, à l'extrémité arrière de la tige percée (22).

7. Dispositif de réhabilitation selon la revendication 6, caractérisé en ce que chaque bras (3, 5) est articulé autour de son extrémité opposée à celle en contact avec la butée (17) autour d'un axe d'articulation (40, 41).

8. Dispositif de réhabilitation selon la revendication 7, caractérisé en ce que l'axe d'articulation (41) du module arrière est remplacé par un second système de segments coniques (37, 38) coopérant entre elles.

9. Dispositif de réhabilitation selon l'une quelconque des revendications 1 à 8, caractérisé en ce que chaque bras (3, 5) est maintenu dans sa position initiale non écartée par un ressort de rappel (39).

10. Dispositif de réhabilitation selon l'une quelconque des revendications 1 à 9, caractérisé en ce que les bras (5) du module arrière (2) sont au nombre de six.

11. Dispositif de réhabilitation selon l'une quelconque des revendications 1 à 10, caractérisé en ce que les moyens d'étanchéité (9) sont sous la forme, à chacune des deux extrémités du module arrière (2), de trois joints en toile de caoutchouc en forme de disque maintenus en place par des rondelles (24) et des supports (25) et dimensionnés de telle façon qu'ils supportent la pression d'injection du produit colmatant dans la chambre d'injection (10) de l'ordre de 1 à 1,5 bar.

**Patentansprüche**

1. Vorrichtung zur Reparatur vor Ort von Rohrleitungen für Regen- oder Abwasser, die wegen ihres zu kleinen Durchmessers nicht begehbar sind, durch Einspritzen eines Schlämmprodukts unter Druck mittels einer Pumpe, wobei das Schlämmprodukt über Zufuhreinrichtungen in eine Injektionskammer geführt wird und die Vorrichtung ein vorderes Modul, das an seinem vorderen Ende ein Einhaksystem aufweist und ein hinteres Modul, das Dichtmittel aufweist, umfaßt, dadurch gekennzeichnet, daß jedes Modul (1, 2) Arme (3, 5) aufweist, die durch eine hydraulische Einrichtung (4, 6), die mit einer sich an der Oberfläche befindlichen hydraulischen Pumpe (8) verbunden ist, von einer Außerbetriebposition in einer Inbetriebposition, beweglich sind, so daß das vordere Modul (1) eine Trenn- und Führungsrolle hat, um den Durchgang des hinteren Moduls (2) zu ermöglichen, wobei letzteres an seinen beiden Enden austauschbare Dichtmittel (9) aufweist, die so zusammen mit der Rohrleitung (7) die Injektionskammer (10) genau auf der Höhe des hinteren Moduls (2) begrenzen, um den Verlust an Schlämmprodukt zu minimieren, wobei dieses teils aus der Kammer (10) mittels einer Röhre (11), die mit der sich an der Oberfläche befindlichen und in die Kammer (10) mündenden Pumpe (12) verbunden ist, und teils in den Wänden der Rohrleitung (7), nicht nur zwischen den Armen (5) des hinteren Moduls (2), sondern auch durch dieselben mit Perforierungen (23) versehenen Arme herangeführt wird, wobei die Dichtmittel (9) auf diese Weise das Schlämmprodukt nach dessen Einbringen halten, und daß eine Anpassung der Reparaturvorrichtung an unterschiedliche Durchmesser der Rohrleitung einerseits aufgrund der Austauschbarkeit der Dichtmittel (9) und andererseits aufgrund-der Mittel (42), mit denen die Arme (3, 5) jedes Moduls (1, 2) zur Befestigung von Plaketten ausgerüstet sind, ermöglicht ist.

2. Vorrichtung nach Anspruch 1, dadurch gekennzeichnet, daß das vordere mit dem hinteren Modul (1, 2) mittels eines Kardan-, Kugel-, Ketten- oder Kabelsystems miteinander gelenkig verbunden ist, um einen besseren Durchgang innerhalb der Rohrleitungen (7) zu ermöglichen, die oft winklige Veränderungen und mitunter sogar Krümmungen aufweisen.

3. Vorrichtung nach einem der Ansprüche 1 oder 2, dadurch gekennzeichnet, daß beide Module (2) abnehmbar sind und mittels einer Einheit aus hydraulischen Schnellanschlußstücken (31) und Hydraulik-Schläuchen (32) miteinander verbunden sind.

4. Vorrichtung nach Anspruch 1, dadurch gekennzeichnet, daß beide Module (1, 2) abnehmbar sind und durch einen Bolzen (26) auf einem Gewinderohr (27) miteinander verbunden sind.

5. Vorrichtung nach einem der Ansprüche 1 bis 4, dadurch gekennzeichnet, daß das Einhaksystem (13) des vorderen Moduls (1) als Haken ausgebildet ist, der es ermöglicht, die Vorrichtung im Innern der Rohrleitung (7) mittels eines Zugkabels (14) und einer sich an der Oberfläche befindlichen Winde (15) herauszuziehen.

6. Vorrichtung nach einem der Ansprüche 1 bis 5, dadurch gekennzeichnet, daß jede hydraulische Einrichtung (4, 6) in Form einer mit einer Rückholfeder (16) versehenen Preßvorrichtung (4) ausgebildet ist, die jeden Arm (3, 5) in Betriebsposition mittels eines Systems von zusammenarbeitenden konischen Segmenten (33, 34 und 35, 36) gegen einen Anschlag (17) preßt, wobei die Preßvorrichtung (4) des vorderen Moduls (1) über einen flexiblen Schlauch (18), der einerseits mit der Hydraulik-Pumpe (8) und andererseits mit dem hinteren Ende der zentralen Hohlstange (19) des Moduls (2) verbunden ist, die wiederum mit der Hauptachse (20) des Moduls (1) verbunden ist, Verbindung mit der Preßvorrichtung (6) des hinteren Moduls (2) über einen Schlauch (21) hat, der einerseits mit der HydraulikPumpe (8) und andererseits mit dem hinteren Ende der Hohlstange (22) verbunden ist.

7. Vorrichtung nach Anspruch 6, dadurch gekennzeichnet, daß jeder Arm (3, 5) an seinem Ende, das dem mit dem Anschlag (17) in Kontakt stehenden Ende gegenüberliegt um eine Drehachse (40, 41) schwenkbar ist.

8. Vorrichtung nach Anspruch 7, dadurch gekennzeichnet, daß die Drehachse (41) des hinteren Moduls (2) durch ein zweites System von konischen Segmenten (37, 38), die zusammenwirken, ersetzt wird.

9. Vorrichtung nach einem der Ansprüche 1 bis 8, dadurch gekennzeichnet, daß jeder Arm (3, 5) in seiner nicht gespreizten Anfangsposition durch eine Rückholfeder (39) gehalten wird.

10. Vorrichtung nach einem der Ansprüche 1 bis 9, dadurch gekennzeichnet, daß sechs Arme (5) des hinteren Moduls (2) vorhanden sind.

11. Vorrichtung nach einem der Ansprüche 1 bis 10, dadurch gekennzeichnet, daß die Dichtmittel (9) an jedem der beiden Enden des hinteren Moduls (2) als drei scheibenförmige Gummidichtungen ausgebildet sind, die durch Unterlegscheiben (24) und Halterungen (25) gehalten werden und die so dimensioniert sind, daß sie einem Injektionsdruck des Schlämmprodukts in der Injektionskammer (10) in der Größenordnung von 1 bis 1,5 bar standhalten.

**Claims**

1. An apparatus for in situ repairing of rainwater and sewage pipework, which is too narrow to be inspected internally, by the pressurised injection of a plugging product by means of a pump, the plugging product being brought to an injection chamber by feed means, the apparatus comprising a front module having a hook system at its front end and a rear module having sealing means, characterised in that each module (1, 2) has arms (3, 5) movable from an inoperative position into an operative position by hydraulic means (4, 6) connected to a hydraulic pump (8) disposed at ground level so that the front module (1) acts as a clearer and guide to facilitate the passage of the rear module (2), the same having interchangeable sealing means (9) at each of its two ends to bound with the pipe (7) an injection chamber (10) in the rear module (20) itself so as to minimise losses of plugging product, the same being fed into the chamber (10) through a tube (11) connected to the pump (12) at ground level and extending into the chamber (10) and also into the walls of the pipe (7) not only between the arms (5) of the rear module (2) but also through the arms (5), the same being formed with perforations (23), the arms (5) therefore maintaining the plugging product after the postioning thereof, it being possible to adapt the apparatus to various pipe diameters by virtue of the interchangeability of the sealing means (9) and by virtue of means (42) on the arms (3, 5) of each module (1, 2) for the attachment of plates.

2. An apparatus according to claim 1, characterised in that the two modules (1, 2) are articulated to one another by way of a cardan or ball or chain or cable system to facilitate their passage through the pipework (7), the same often having angular variations and sometimes even elbow-like bends.

3. An apparatus according to claim 1 and/or 2, characterised in that the front and rear modules (1, 2) are demountable and are interconnected by way of a set of rapid hydraulic unions (31) and flexible hydraulic lines (32).

4. An apparatus according to claim 1, characterised in that the front and rear modules (1, 2) are demountable and are interconnected by bolting (26) one a screwthreaded tube (27).

5. An apparatus according to any of claims 1 to 4, characterised in that the hook system (13) of the front module (1) is in the form of a hook enabling the apparatus to the drawn through the pipework (7) by a pull cable (14) and a surface-mounted winch (15).

6. An apparatus according to any of claims 1 to 5, characterised in that each hydraulic means (4, 6) is in the form of a ram having a return spring (16) actuating each arm (3, 5) in its operative position against an abutment (17) by way of a system of co-operating conical segments (33, 34 and 35, 36), the ram (4) of the front module (1) being connected by way of a flexible line (18) to the hydraulic pump (8) and to the rear end of the pierced central rod (19) of the module (2), the latter rod being connected to the primary shaft (20) of the module (1), the ram (6) of the rear module (2) being connected by way of a flexible line (21) to the hydraulic pump (8) and to the rear end of the pierced rod (22).

7. An apparatus according to claim 6, characterised in that each arm (3, 5) is pivoted, at its end remote from the end in contact with the abutment (17), around a pivot spindle (40, 41).

8. An apparatus according to claim 7, characterised in that the pivot spindle (41) of the rear module is replaced by a second system of co-operating conical segments (37, 38).

9. An apparatus according to any of claims 1 to 8, characterised in that each arm (3, 5) is retained in its initial non-separated position by a return spring (39).

10. An apparatus according to any of claims 1 to 9, characterised in that the rear module (2) has six arms (5).

11. An apparatus according to any of claims 1 to 10, characterised in that the sealing means (9) at each of the two ends of the rear module (2) are in the form of three disc-shaped rubberised cloth seals located by washers (24) and supports (25) and so dimensioned as to withstand the pressure, of the order of 1 to 1.5 bar, at which the plugging product is injected into the injection chamber (10).

Fig.1

Fig. 2

EP 0 346 256 B1

Fig.3

Fig.4

EP 0 346 256 B1

Fig. 5

Fig. 6

Fig.7